# EUROPEAN PATENT APPLICATION

(11) **EP 4 699 704 A1**
(43) Date of publication of application: **25.02.2026**
(21) Application number: 25179760.1
(22) Date of filing: 29.05.2025
(51) Int. Cl.: B05B 5/043, B05B 5/053, B05B 5/025, B01J 13/00, F02M 69/00, F23D 11/32, F02M 39/00

(54) **RESONANT CAVITY ELECTROSPRAY SYSTEMS AND METHODS**

(30) Priority: 19.08.2024 US 202418808609
(71) Applicant: Lockheed Martin Corporation, Bethesda, MD 20817 (US)
(72) Inventor: Heinrich, Jonathon Robert, Savage MN, 55378 (US); Rhoads, John, Fort Worth TX, 76108 (US)
(74) Representative: Barker Brettell LLP

(57) **Abstract**

In one embodiment, systems and methods include an electrospray device (102) for atomizing fluids comprising a body (114) defining a resonant microwave cavity (116), wherein the body comprises a radio frequency inlet (118) configured to inject a radio frequency signal received from a power source (104) into the resonant microwave cavity, wherein the resonant microwave cavity is configured to to amplify a voltage of the radio frequency signal. The device further comprises a field concentrating pole (120) disposed within the resonant microwave cavity configured to concentrate the amplified voltage at a first end of the field concentrating pole to form an electric field. The device further comprises a nozzle (130) disposed at the first end of the field concentrating pole and a fluid supply line (126) configured to provide a fluid disposed within the field concentrating pole and fluidly connected to the nozzle, wherein the fluid supply line is fluidly connected to a fluid source (128).

## Description

### TECHNICAL FIELD

This disclosure generally relates to electrospray, and more specifically to an electrospray device using a low-voltage power source.

### BACKGROUND

Traditional electrospray systems apply a high voltage to break up and disperse liquids as an aerosol or spray. The systems have been using a high-voltage power source to supply the power for operations. The high-voltage power sources experience electric breakdown in low-pressure environments and are not as robust as desired. There is a need for an improved electrospray device.

### SUMMARY

According to one embodiment, an electrospray device for atomizing fluids may include a body defining a resonant microwave cavity, wherein the body comprises a radio frequency inlet configured to inject a radio frequency signal received from a power source into the resonant microwave cavity, and wherein the resonant microwave cavity is configured to amplify a voltage of the radio frequency signal. The electrospray device may also include a field concentrating pole disposed within the resonant microwave cavity configured to concentrate the amplified voltage at a first end of the field concentrating pole to form an electric field. The electrospray device may also include a nozzle disposed at the first end of the field concentrating pole and a fluid supply line configured to provide a fluid dispensed through the first end of the field concentrating pole, through the amplified voltage, and fluidly connected to the nozzle, wherein the fluid supply line is fluidly connected to a fluid source. The electric field may atomize the fluid at the first end of the field concentrating pole forming an atomized fluid. The atomized fluid may pass though the nozzle into a fluid receiving area.

In a particular embodiment, the radio frequency inlet is configured to receive a conduit providing power from the power source.

In a particular embodiment, the body may be cylindrical in shape. The cylindrical shape of the resonant microwave cavity may have an approximately 1-inch outer diameter and may have an approximately 1-inch height, depending on resonant frequency.

In a particular embodiment, the body may comprise a dielectric material.

In a particular embodiment, the injected radio frequency may have a radio frequency power of approximately 10 dBm.

In a particular embodiment, the electric field at the first end of the field concentrating pole may have a peak root mean squared greater than 500 kV/m, and the high Q-resonant microwave cavity may have a Q-factor greater than 1500.

In a particular embodiment, the field concentrating pole may include a second end disposed opposite to the first end. According to this embodiment, the radio frequency inlet of the resonant microwave cavity may be proximally located to the second end of the field concentrating pole.

In a particular embodiment, the fluid may be a type of fuel.

According to another embodiment, a method for atomizing fluids may include transmitting radio frequency signals to a resonant microwave cavity from a radio frequency source. The method may also include amplifying the radio frequency signals within the resonant microwave cavity to increase the voltage of the radio frequency signals. The method may also include generating an electric field at a first end of a field concentrating pole by concentrating the amplified radio frequency signal. The method may also include supplying a fluid to the first end of the field concentrating pole. The method may also include atomizing the fluid at the first end of the field concentrating pole, where the electric field atomizes the fluid. The method may also include spraying the atomized fluid through a nozzle proximally located to the first end of the field concentrating pole.

In a particular embodiment, the resonant microwave cavity may have a high Q-resonant microwave cavity. The high Q-resonant microwave cavity may have a Q-factor greater than 1500.

In a particular embodiment, the radio frequency signal may have a radio frequency power of approximately 10 dBm.

In a particular embodiment, the electric field at the first end of the field concentrating pole may have a peak root mean squared greater than 500 kV/m.

In a particular embodiment, the body may be cylindrical in shape and may include a central axis. According to this embodiment, the field concentrating pole may be disposed along the central axis of the resonant microwave cavity.

In a particular embodiment, the field concentrating pole is capacitively coupled.

In a particular embodiment, the fluid may be supplied to the first end of the field concentrating pole through a fluid supply line. The fluid supply line may be disposed with the field concentrating pole.

According to another embodiment, an electrospray system for atomizing fluids may include an electrospray device comprising a body defining a resonant microwave cavity, wherein the body comprises a radio frequency inlet configured to inject a radio frequency signal received from a power source into the resonant microwave cavity, and wherein the resonant microwave cavity is configured to to amplify a voltage of the radio frequency signal. The electrospray device may also include a field concentrating pole disposed within the resonant microwave cavity configured to concentrate the amplified voltage at a first end of the field concentrating pole to form an electric field. The electrospray device may also include a nozzle disposed at the first end of the field concentrating pole and a fluid supply line configured to provide a fluid disposed within the field concentrating pole and fluidly connected to the nozzle, wherein the fluid supply line is fluidly connected to a fluid source. The electrospray system may also include the power source and a controller configured to instruct the power source to supply power to the electrospray device.

In a particular embodiment, the electric field at the first end of the field concentrating pole may be configured to have a peak root mean squared value greater than 500 kV/m.

In a particular embodiment, the resonant microwave cavity may have a Q-factor greater than 1500.

In a particular embodiment, the field concentrating pole may have a second end disposed opposite to the first end, wherein the radio frequency inlet of the resonant microwave cavity is proximally located to the second end of the field concentrating pole.

### BRIEF DESCRIPTION OF THE DRAWINGS

To assist in understanding the present disclosure, reference is now made to the following description taken in conjunction with the accompanying drawings, in which:
FIG. 1 illustrates an example electrospray system, according to certain embodiments;
FIG. 2 illustrates an example controller for the example electrospray system in FIG. 1, according to certain embodiments; and
FIG. 3 illustrates an example operation of the example electrospray system in FIG. 1, according to certain embodiments.

### DETAILED DESCRIPTION

Illustrative embodiments of the disclosure are described in detail herein. In the interest of clarity, not all features of an actual implementation may be described. It will of course be appreciated that in the development of any such actual embodiment, numerous implementation specific decisions may be made to achieve the specific implementation goals, which may vary from one implementation to another. Moreover, it will be appreciated that such a development effort might be complex and time consuming but would nevertheless be a routine undertaking for those of ordinary skill in the art having the benefit of the present disclosure.

The terms "couple" or "couples," as used herein, are intended to mean either an indirect or direct connection. Thus, if a first device couples to a second device, that connection may be through a direct connection, or through an indirect electric connection or a shaft coupling via other devices and connections.

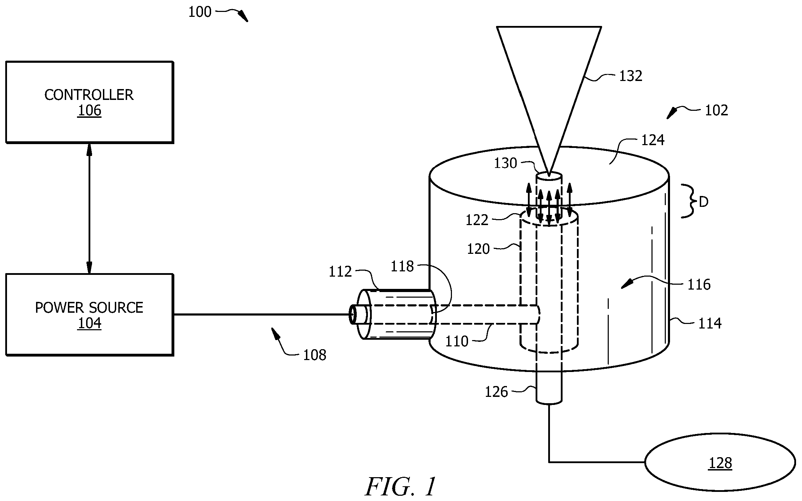

To facilitate a better understanding of the present disclosure, the following examples of certain embodiments are given. The following examples are not to be read to limit or define the scope of the disclosure. Embodiments of the present disclosure and its advantages are best understood by referring to FIGs. 1 through 3, where like numbers are used to indicate like and corresponding parts. Described herein are various systems and methods that provide usage of a low-voltage power source for an electrospray device. The technical advantages provided by the present disclosure may be utilized in fuel injection and/or aerosol dispersion.

FIG. 1 illustrates an example electrospray system 100. The electrospray system 100 may be configured to receive a fluid and to convert the received fluid into an aerosol (i.e., a suspension of liquid particles in a gas). In embodiments, the electrospray system 100 may utilize electricity to apply a voltage to the received fluid in order to produce the aerosol. The electrospray system 100 may comprise an electrospray device 102, a power source 104, and a controller 106. The power source 104 may be configured to provide or supply power to the electrospray device 102 via radio frequency. The power source 104 may be any suitable source capable of generating radio frequency signals from about 10 dBm to about 50 dBm. The power source 104 may be directly or indirectly coupled to the electrospray device 102. In embodiments, the power source 104 may be coupled to the electrospray device 102 through a suitable conduit 108. For example, conduit 108 may be a coaxial cable comprising an inner conductor 110 and an outer conductor 112 surrounded by one or more casing materials configured to protect both the inner conductor 110 and outer conductor 112 from the external environment. In embodiments, the power source 104 may transmit radio frequency signals to the electrospray device 102 via the conduit 108. The controller 106 may be configured to instruct the power source 104 supply power to the electrospray device 102. In embodiments, the controller 106 may be communicatively coupled to the power source 104 through any suitable means, such as through a wired connection or through a wireless connection.

As illustrated, the electrospray device 102 may comprise a body 114 defining a resonant microwave cavity 116. The body 114 may be any suitable size, height, shape, and combinations thereof. With reference to FIG. 1, the body 114 may be generally in a cylindrical shape. The body 114 may have approximately a 1 inch outer diameter and a 1 inch height. In other embodiments, the outer diameter and height may be different dimensions. As the resonant microwave cavity 116 is defined by the body 114, both the body 114 and resonant microwave cavity 116 may generally comprise a similar shape. In embodiments, the body 114 may comprise any suitable materials, including, but not limited to, metals, nonmetals, polymers, ceramics, composites, and any combinations thereof. Without limitations, the body 114 may comprise a dielectric material having a nonconducting surface capable of holding an electric charge and/or metallic materials.

The resonant microwave cavity 116 may be a "high resonant" cavity exemplified by having a Q-factor greater than or equal to 1500. In embodiments, the resonant microwave cavity 116 may operate as a voltage amplifier for a given frequency at a specified cavity location. For example, the resonant microwave cavity 116 may act to increase the cavity localized voltage determined based from a received radio frequency signal from the power source 104. The electrospray device 102 may comprise a radio frequency inlet 118 configured to inject one or more radio frequency signals from power source 104 into the resonant microwave cavity 116. As illustrated, the radio frequency inlet 118 may be a port defined within a side of the body 114. The radio frequency inlet 118 may be disposed about any suitable location along the body 114 and may comprise any suitable size, shape, and/or height capable of receiving at least a portion of the conduit 108.

The electrospray device 102 may further comprise a field concentrating pole 120 disposed within the resonant microwave cavity 116. The field concentrating pole 120 may be disposed along a central axis of the body 114. The field concentrating pole 120 may be configured to receive one or more radio frequency signals transmitted from the power source 104. In one example, the field concentrating pole 120 may be directly coupled to conduit 108 at a lower end of the field concentrating pole 120, wherein the radio frequency signals are supplied to the field concentrating pole 120 by the conduit 108. In other embodiments, the field concentrating pole 120 may receive radio frequency signals indirectly from the power source 104. In certain embodiments, the length of the field concentrating pole 120 may be less than the height of the body 114. For example, there may be a gap defined be a distance ("D") between a top end 122 of the field concentrating pole 120 and a top end 124 of the body 114. In embodiments, the field concentrating pole 120 may be further configured to concentrate the amplified voltage at the resonant frequency at the top end 122 to form an electric field.

The electrospray device 102 may further comprise a fluid supply line 126 configured to provide or supply a fluid to the body 114. The fluid supply line 126 may also be disposed along the central axis of the body 114, wherein the field concentrating pole 120 may be disposed around the fluid supply line 126. The fluid supply line 126 may be fluidly coupled to an external fluid source 128, wherein the fluid supply line 126 may extend through the body 114 and into the resonant microwave cavity 116. In embodiments, the fluid source 128 may provide the fluid to be operated on by the electrospray device 102 via the fluid supply line 126. Any suitable fluid may be provided. For example, the provided fluid may be a liquid fuel. As illustrated, a nozzle 130 may be disposed and/or secured to an end of the fluid supply line 126 near or at the top end 122 of the field concentrating pole 120. The nozzle 130 may be configured to discharge the fluid provided by the fluid supply line 126 after atomization as an aerosol 132. In embodiments, discharge may be in the form of spraying the aerosol 132.

In embodiments, as the fluid provided via the fluid supply line 126 travels into the resonant microwave cavity 116, the fluid may encounter and be affected by the electric field generated about the top end 122 of the field concentrating pole 120. Depending on the magnitude of the electric field, the affected fluid may be atomized and further conveyed to the nozzle 130 for discharge as aerosol 132. The aforementioned gap defined by the distance D, the dimensions of the field concentrating pole 120, and/or the dimensions of the resonant microwave cavity 116 may be altered or adjusted to change the magnitude of the electric field. For example, the generated electric field may have a peak root mean squared value greater than 500 kV/m. Increases or decreases in this value may be dependent on the gap defined by the distance D, the dimensions of the field concentrating pole 120, and/or the dimensions of the resonant microwave cavity 116.

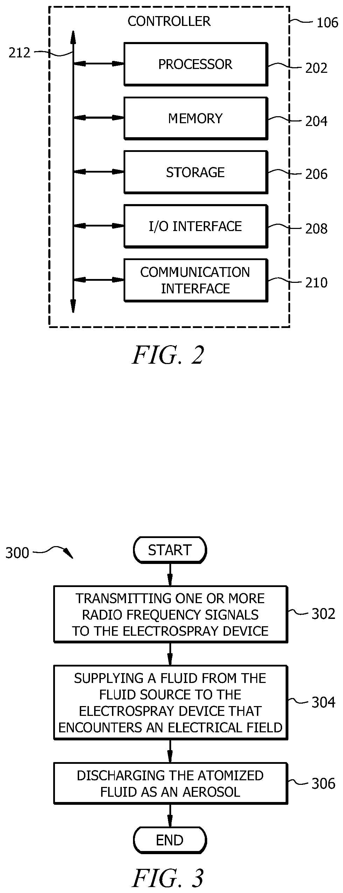

FIG. 2 illustrates the controller 106 of electrospray system 100 (referring to FIG. 1), in accordance with certain embodiments. In particular embodiments, one or more controllers 106 perform one or more steps of one or more methods described or illustrated herein. In particular embodiments, one or more controllers 106 provide functionality described or illustrated herein. In particular embodiments, software running on one or more controllers 106 performs one or more steps of one or more methods described or illustrated herein or provides functionality described or illustrated herein. Particular embodiments include one or more portions of one or more controllers 106. Herein, reference to a controller may encompass a computing device, and vice versa, where appropriate. Moreover, reference to a controller may encompass one or more controllers, where appropriate.

This disclosure contemplates any suitable number of controllers 106. This disclosure contemplates controller 106 taking any suitable physical form. As example and not by way of limitation, controller 106 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, an augmented/virtual reality device, or a combination of two or more of these. Where appropriate, controller 106 may include one or more controllers 106; be unitary or distributed; span multiple locations; span multiple machines; span multiple data centers; or reside in a cloud, which may include one or more cloud components in one or more networks. Where appropriate, one or more controllers 106 may perform without substantial spatial or temporal limitation one or more steps of one or more methods described or illustrated herein. As an example and not by way of limitation, one or more controllers 106 may perform in real time or in batch mode one or more steps of one or more methods described or illustrated herein. One or more controllers 106 may perform at different times or at different locations one or more steps of one or more methods described or illustrated herein, where appropriate.

In particular embodiments, controller 106 includes a processor 202, memory 204, storage 206, an input/output (I/O) interface 208, a communication interface 210, and a bus 212. Although this disclosure describes and illustrates a particular controller having a particular number of particular components in a particular arrangement, this disclosure contemplates any suitable controller having any suitable number of any suitable components in any suitable arrangement.

In particular embodiments, processor 202 includes hardware for executing instructions, such as those making up a computer program. As an example and not by way of limitation, to execute instructions, processor 202 may retrieve (or fetch) the instructions from an internal register, an internal cache, memory 204, or storage 206; decode and execute them; and then write one or more results to an internal register, an internal cache, memory 204, or storage 206. In particular embodiments, processor 202 may include one or more internal caches for data, instructions, or addresses. This disclosure contemplates processor 202 including any suitable number of any suitable internal caches, where appropriate. As an example and not by way of limitation, processor 202 may include one or more instruction caches, one or more data caches, and one or more translation lookaside buffers (TLBs). Instructions in the instruction caches may be copies of instructions in memory 204 or storage 206, and the instruction caches may speed up retrieval of those instructions by processor 202. Data in the data caches may be copies of data in memory 204 or storage 206 for instructions executing at processor 202 to operate on; the results of previous instructions executed at processor 202 for access by subsequent instructions executing at processor 202 or for writing to memory 204 or storage 206; or other suitable data. The data caches may speed up read or write operations by processor 202. The TLBs may speed up virtual-address translation for processor 202. In particular embodiments, processor 202 may include one or more internal registers for data, instructions, or addresses. This disclosure contemplates processor 202 including any suitable number of any suitable internal registers, where appropriate. Where appropriate, processor 202 may include one or more arithmetic logic units (ALUs); be a multi-core processor; or include one or more processors 202. Although this disclosure describes and illustrates a particular processor, this disclosure contemplates any suitable processor.

In particular embodiments, memory 204 includes main memory for storing instructions for processor 202 to execute or data for processor 202 to operate on. As an example and not by way of limitation, controller 106 may load instructions from storage 206 or another source (such as, for example, another controller 106) to memory 204. Processor 202 may then load the instructions from memory 204 to an internal register or internal cache. To execute the instructions, processor 202 may retrieve the instructions from the internal register or internal cache and decode them. During or after execution of the instructions, processor 202 may write one or more results (which may be intermediate or final results) to the internal register or internal cache. Processor 202 may then write one or more of those results to memory 204. In particular embodiments, processor 202 executes only instructions in one or more internal registers or internal caches or in memory 204 (as opposed to storage 206 or elsewhere) and operates only on data in one or more internal registers or internal caches or in memory 204 (as opposed to storage 206 or elsewhere). One or more memory buses (which may each include an address bus and a data bus) may couple processor 202 to memory 204. Bus 212 may include one or more memory buses, as described below. In particular embodiments, one or more memory management units (MMUs) reside between processor 202 and memory 204 and facilitate accesses to memory 204 requested by processor 202. In particular embodiments, memory 204 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 204 may include one or more memories 204, where appropriate. Although this disclosure describes and illustrates particular memory, this disclosure contemplates any suitable memory.

In particular embodiments, storage 206 includes mass storage for data or instructions. As an example and not by way of limitation, storage 206 may include a hard disk drive (HDD), a floppy disk drive, flash memory, an optical disc, a magneto-optical disc, magnetic tape, or a Universal Serial Bus (USB) drive or a combination of two or more of these. Storage 206 may include removable or non-removable (or fixed) media, where appropriate. Storage 206 may be internal or external to controller 106, where appropriate. In particular embodiments, storage 206 is non-volatile, solid-state memory. In particular embodiments, storage 206 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 206 taking any suitable physical form. Storage 206 may include one or more storage control units facilitating communication between processor 202 and storage 206, where appropriate. Where appropriate, storage 206 may include one or more storages 206. Although this disclosure describes and illustrates particular storage, this disclosure contemplates any suitable storage.

In particular embodiments, I/O interface 208 includes hardware, software, or both, providing one or more interfaces for communication between controller 106 and one or more I/O devices. Controller 106 may include one or more of these I/O devices, where appropriate. One or more of these I/O devices may enable communication between a person and controller 106. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 208 for them. Where appropriate, I/O interface 208 may include one or more device or software drivers enabling processor 202 to drive one or more of these I/O devices. I/O interface 208 may include one or more I/O interfaces 208, where appropriate. Although this disclosure describes and illustrates a particular I/O interface, this disclosure contemplates any suitable I/O interface.

In particular embodiments, communication interface 210 includes hardware, software, or both providing one or more interfaces for communication (such as, for example, packet-based communication) between controller 106 and one or more other controllers 106 or one or more networks. As an example and not by way of limitation, communication interface 210 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 210 for it. As an example and not by way of limitation, controller 106 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, controller 106 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network, a Long-Term Evolution (LTE) network, or a 5G network), or other suitable wireless network or a combination of two or more of these. Controller 106 may include any suitable communication interface 210 for any of these networks, where appropriate. Communication interface 210 may include one or more communication interfaces 210, where appropriate. Although this disclosure describes and illustrates a particular communication interface, this disclosure contemplates any suitable communication interface.

In particular embodiments, bus 212 includes hardware, software, or both coupling components of controller 106 to each other. As an example and not by way of limitation, bus 212 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 212 may include one or more buses 212, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

FIG. 3 is a flowchart of an embodiment of a process 300 for the electrospray system 100 (referring to FIG. 1). The electrospray system 100 may employ process 300 for generating aerosol 132 (referring to FIG. 1) from an electric field generated from a relatively lower-voltage source (i.e., the generated electric field has a relatively higher-voltage output compared to the provided radio frequency signals). At operation 302, processor 202 (referring to FIG. 2) of the controller 106 (referring to FIGs. 1-2) may instruct the power source 104 (referring to FIG. 1) to transmit one or more radio frequency signals to the electrospray device 102 (referring to FIG. 1). The radio frequency signals may be transmitted via the conduit 108 (referring to FIG. 1) through the body 114 (referring to FIG. 1) and into the resonant microwave cavity 116 (referring to FIG. 1). In embodiments, the radio frequency signals may travel along the field concentrating pole 120 (referring to FIG. 1) and generate an electric field at the top end 122 (referring to FIG. 1) of the field concentrating pole 120. The peak-to-peak voltage of the input radio frequency signal may be further amplified based, at least in part, on the gap defined by the distance D, the dimensions of the field concentrating pole 120, and the dimensions of the resonant microwave cavity 116.

At operation 304, the processor 202 of the controller 106 may transmit an instruction to supply a fluid to the electrospray device 102 from the fluid source 128 (referring to FIG. 1). The fluid may be conveyed via the fluid supply line 126 (referring to FIG. 1) extending through the body 114 and into the resonant microwave cavity 116. As the fluid travels to an end of the fluid supply line 126, the fluid may encounter and be affected by the generated electric field and be atomized.

At operation 306, the nozzle 130 (referring to FIG. 1) disposed at the end of the fluid supply line 126 may be actuated to discharge the atomized fluid as the aerosol 132, and the process 300 may proceed to end. In embodiments, discharge may be in the form of spraying the aerosol 132.

Modifications, additions, or omissions may be made to the systems and apparatuses described herein without departing from the scope of the disclosure. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic.

Modifications, additions, or omissions may be made to the methods described herein without departing from the scope of the disclosure. The methods may include more, fewer, or other steps. Additionally, steps may be performed in any suitable order. That is, the steps of any method disclosed herein do not have to be performed in the exact order disclosed, unless explicitly stated.

The present disclosure may provide numerous advantages, such as the various technical advantages that have been described with respective to various embodiments and examples disclosed herein. Other technical advantages will be readily apparent to one skilled in the art from the following figures, descriptions, and claims. Moreover, while specific advantages have been enumerated in this disclosure, various embodiments may include all, some, or none of the enumerated advantages.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

## Claims

1. An electrospray device for atomizing fluids, comprising:
a body defining a resonant microwave cavity, wherein the body comprises a radio frequency inlet configured to provide a radio frequency signal received from a power source into the resonant microwave cavity, wherein the resonant microwave cavity is configured to amplify a voltage of the radio frequency signal;
a field concentrating pole disposed within the resonant microwave cavity configured to concentrate the amplified voltage at a first end of the field concentrating pole to form an electric field;
a fluid supply line configured to provide a fluid disposed within the field concentrating pole; and
a nozzle disposed at an end of the fluid supply line,
wherein the fluid supply line is fluidly connected to a fluid source,
wherein the electric field is configured to atomize the fluid provided by the fluid supply line at the first end of the field concentrating pole to form an atomized fluid,
wherein the nozzle is configured to discharge the atomized fluid.

2. The electrospray device of claim 1, wherein the radio frequency inlet is configured to receive a conduit providing power from the power source.

3. The electrospray device of claim 1 or claim 2, wherein the body is cylindrical in shape having an approximately 1-inch outer diameter and an approximately 1-inch height.

4. The electrospray device of any one of claims 1 to 3, wherein the body comprises both metallic and dielectric materials.

5. The electrospray device of any one of claims 1 to 4, wherein the field concentrating pole has a second end disposed opposite to the first end, wherein the radio frequency inlet of the resonant microwave cavity is proximally located to the second end of the field concentrating pole.

6. A method for atomizing fluids, the method comprising:
transmitting one or more radio frequency signals to a resonant microwave cavity provided by a power source;
amplifying a voltage of the one or more radio frequency signals within the resonant microwave cavity;
generating an electric field at a first end of a field concentrating pole;
supplying a fluid to the first end of the field concentrating pole through a fluid supply line;
atomizing the fluid at the first end of the field concentrating pole, wherein the electric field atomizes the fluid; and
spraying the atomized fluid through a nozzle disposed at an end of the fluid supply line.

7. The method of claim 6, wherein a radio frequency inlet is configured to receive a conduit providing power from the power source.

8. The electrospray device of claim 1 or the method of claim 6, wherein radio frequency signal or the one or more radio frequency signals has a power of approximately 10 dBm.

9. The method of claim 6, wherein a body defining the resonant microwave cavity is cylindrical in shape having an approximately 1-inch outer diameter and an approximately 1-inch height.

10. The method of claim 6, wherein the field concentrating pole is disposed along a central axis of the resonant microwave cavity.

11. The method of claim 6, wherein the fluid is supplied to the first end of the field concentrating pole through a fluid supply line disposed through the field concentrating pole.

12. An electrospray system for atomizing fluids, comprising:
an electrospray device comprising:
a body defining a resonant microwave cavity, wherein the body comprises a radio frequency inlet configured to provide a radio frequency signal received from a power source into the resonant microwave cavity, wherein the resonant microwave cavity is configured to amplify a voltage of the radio frequency signal;
a field concentrating pole disposed within the resonant microwave cavity configured to concentrate the amplified voltage at a first end of the field concentrating pole to form an electric field;
a fluid supply line configured to provide a fluid disposed within the field concentrating pole; and
a nozzle disposed at an end of the fluid supply line;
the power source; and
a controller configured to instruct the power source to supply power to the electrospray device.

13. The electrospray device of claim 1 or the method of claim 6 or the electrospray system of claim 12, wherein the electric field at the first end of the field concentrating pole is configured to have a peak root mean squared value greater than 500 kV/m.

14. The electrospray device of claim 1 or the method of claim 6 or the electrospray system of claim 12, wherein the resonant microwave cavity has a Q-factor greater than 1500.

15. The electrospray system of claim 12, wherein the field concentrating pole has a second end disposed opposite to the first end, wherein the radio frequency inlet of the resonant microwave cavity is proximally located to the second end of the field concentrating pole.
